# FASCICULE DE BREVET EUROPEEN

(11) **EP 2 247 857 B1**
(45) Date de publication et mention de la délivrance du brevet: **16.10.2013**
(21) Numéro de dépôt: 09700759.5
(22) Date de dépôt: 08.01.2009
(51) Int. Cl.: F04B 53/08, A47J 31/40, A47J 31/46, H05B 3/34, F04B 53/16

(54) **POMPE VOLUMETRIQUE CHAUFFANTE POUR LIQUIDES**
HEIZBARE VOLUMETRISCHE PUMPE ZUM FÖRDERN VON FLÜSSIGKEITEN
HEATING POSITIVE-DISPLACEMENT PUMP FOR LIQUIDS

(30) Priorité: 09.01.2008 CH 25082008
(43) Date de publication de la demande: 10.11.2010
(73) Titulaire: Gotec SA, 1950 Sion (CH)
(72) Inventeur: GRENON, Vincent, CH-1908 Riddes (CH)
(74) Mandataire: P&TS SA (AG, Ltd.)
(86) Numéro de dépôt international: PCT/EP2009/050191
(87) Numéro de publication internationale: WO 2009/087203

(56) Documents cités:
- EP-A- 0 496 939
- EP-A- 0 592 943
- DE-A1- 19 852 092
- GB-A- 2 153 190
- GB-A- 2 347 058
- US-A- 5 477 675
- US-A1- 2005 007 406

## Description

### Domaine technique

La présente invention concerne une pompe à liquide volumétrique incluant un corps de chauffe. Une application particulière de cette pompe concerne le chauffage à une température donnée d'une dose précise de liquide, par exemple dans un distributeur de boissons chaudes.

### Etat de la technique

On connaît de nombreux exemples de pompes à liquide fonctionnant selon différents principes. Il existe par ailleurs différents types de dispositifs de chauffage d'eau. De nombreuses machines à café emploient un réservoir dans laquelle l'eau est préchauffée avant d'être pompée à travers la poudre de café puis versée dans les tasses. Ces dispositifs nécessitent de préchauffer un volume d'eau plus important que celui qui sera finalement utilisé, ce qui occasionne un gaspillage énergétique. Lorsqu'inversement on a besoin d'un volume de café supérieur à la contenance du réservoir, il est nécessaire d'attendre après le remplissage que l'eau nouvellement introduite ait été chauffée.

On connaît par ailleurs des dispositifs de chauffage de liquide en continu dans lesquels l'eau est chauffée lors de son passage dans un tube ou un tuyau. De tels dispositifs sont décrits par exemple dans la demande de brevet EP-A1-1380243 (Nestec SA) qui illustre un module de chauffage de liquide comportant un tube creux revêtu d'au moins deux résistances chauffantes, par exemple des fils ou des encres conductrices déposées sur un substrat. Une solution similaire est aussi décrite dans EP-A1-1097663.

Les solutions de l'art antérieur nécessitent en général une pompe pour faire circuler l'eau dans un tube chauffant ou un thermobloc, et un débitmètre pour contrôler la quantité d'eau fournie. Le dispositif complet comporte donc de nombreuses pièces discrètes distinctes, complexes à combiner, et dont l'assemblage nécessite un volume important. Par ailleurs, la température de l'eau dépend à la fois du courant électrique dans le module de chauffage et du débit de l'eau dans le tube, ce qui nécessite une régulation assez complexe.

La demande de brevet FR2780262 décrit une machine à café comportant une pompe à piston creux animé par un moteur électromagnétique. Le piston creux traversé par le liquide est difficile à nettoyer ; en outre, il ne permet pas de déplacer un volume d'eau constant à chaque actionnement. Un débitmètre est donc requis, formé dans ce cas d'une roue folle à ailettes mise en rotation par le flux de liquide.

Des autres exemples de distributeur de boisson chaude comportant une pompe à piston sont décrits dans les brevets US2654505 et FR2012636

La demande de brevet EP-A1-496939, qui représente l'art antérieur le plus proche, décrit une autre pompe pour machine à café comportant un piston coulissant dans un cylindre actionné par un moteur et un actuateur. La course du piston, qui détermine le volume de liquide aspiré puis rejeté dans le cylindre, est contrôlée à l'aide de micro-connecteurs ou d'un encodeur connectés au moteur. Les signaux des microswitches ou de l'encodeur sont traités par une électronique qui génère des signaux de commande pour le moteur. Le volume d'eau dans le cylindre est chauffé à l'aide d'un fil résistif bobiné autour de la surface externe du cylindre et parcouru par un courant électrique.

Cet arrangement permet de chauffer le liquide directement à l'intérieur de la pompe, de sorte qu'un tube chauffant additionnel n'est pas requis. Par ailleurs, l'usage d'une pompe à piston permet de contrôler facilement le volume de liquide aspiré, simplement en modifiant la course du piston. Toutefois, le temps nécessaire à l'obtention d'une tasse de café chaud est important, pour plusieurs raisons :

Tout d'abord, le tube est chauffé à l'aide d'un fil discret enroulé autour du cylindre. Seule une partie de la chaleur émise par le fil est transmise au cylindre puis au liquide ; le reste est dissipé dans l'air. La résistance thermique entre le fil et le cylindre est en effet importante, à moins que des mesures coûteuses, par exemple l'utilisation d'une pâte conductrice électriquement, ne soient mises en oeuvre.

D'autre part, le chauffage du cylindre commence uniquement lorsque celui-ci est plein de liquide. L'inertie thermique importante du fil chauffant et du cylindre ralentit la transmission de chaleur et augmente le temps nécessaire au chauffage du volume de liquide aspiré. Cette inertie rend en outre difficile le maintien précis d'une température du liquide constante ; le temps de réaction du système est trop important, notamment lorsque les conditions externes changent, par exemple lors de l'évacuation du liquide. Par ailleurs, en raison de l'inertie thermique importante et de la résistance thermique entre le fil et le cylindre, le système reste chaud pendant une durée relativement importante même lorsque le courant électrique est interrompu.

Enfin, la chaleur de la résistance est transmise sur toute la longueur du cylindre, même lorsqu'une faible quantité de liquide doit être chauffée pour un espresso par exemple. Les spires de la résistance au-dessus du-piston, dans la zone vide de liquide, fournissent une chaleur qui n'est guère utilisée et qui est transmise à l'environnement en pure perte. Si le gaspillage de courant électrique qui en résulte peut à la rigueur être toléré dans une installation alimentée par le courant électrique du réseau, il n'en va pas de même dans le cas d'une machine destinée à être alimentée par une source de courant autonome, par exemple une batterie automobile.

### Bref résumé de l'invention

Un but de la présente invention est de proposer une pompe à liquide exempte des limitations des pompes décrites dans les documents mentionnés ci-dessus. En particulier, un but est de proposer une pompe permettant de transférer et de chauffer rapidement un volume contrôlé de liquide, à l'aide d'un dispositif compact et facile à fabriquer et à assembler.

Il a été découvert dans le cadre de cette invention que la qualité d'un café dépend fortement de la température de l'eau traversant la poudre ; une température précisément contrôlée et constante tout au long de l'écoulement au travers de la poudre permet d'améliorer considérablement la qualité du café obtenu. En effet, une température trop basse ne permet pas à l'eau d'emporter tous les arômes du café, tandis qu'une température trop élevée brûle certains arômes, ou produit même des bulles de vapeur qui traversent simplement la poudre de café sans en prendre le goût. Un autre but de l'invention est donc de proposer un dispositif permettant de délivrer un volume d'eau contrôlé, à une vitesse d'écoulement contrôlée, et avec une température constante tout au long de l'écoulement.

Selon l'invention, ces buts sont atteints notamment au moyen d'une pompe à liquide comportant les caractéristiques de la revendication principale, et à l'aide d'un procédé comportant les caractéristiques de la revendication indépendante de procédé. Des formes d'exécution préférentielles mais non essentielles sont indiquées dans les revendications dépendantes et dans la description.

### Brève description des figures

Des exemples de mise en oeuvre de l'invention sont indiqués dans la description illustrée par les figures annexées dans lesquelles :

La figure 1 illustre une vue en perspective d'une pompe selon l'invention.

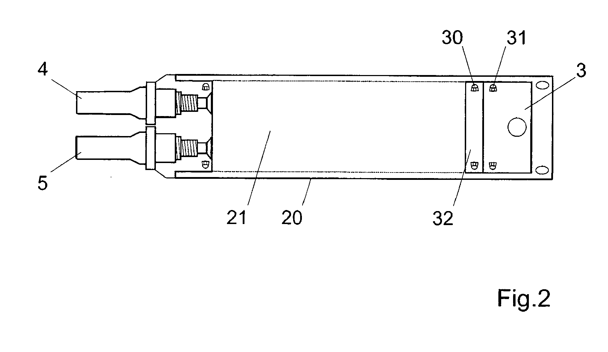

La figure 2 illustre une vue en coupe d'une pompe selon l'invention, représentée sans l'élément moteur.

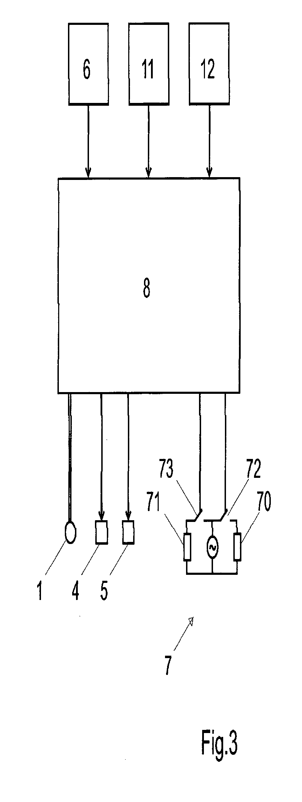

La figure 3 est un schéma-bloc du système.

### Exemple(s) de mode de réalisation de l'invention

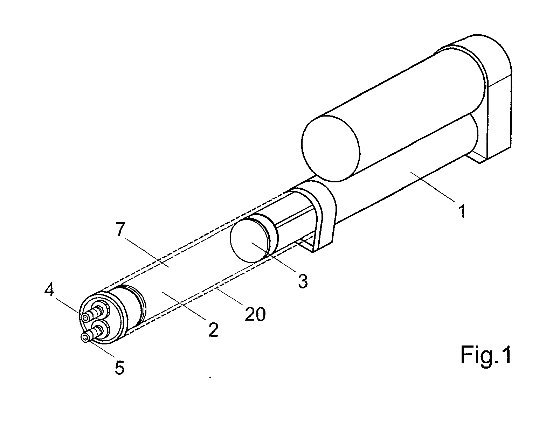

Un exemple de pompe selon l'invention est illustré sur la figure 1. La pompe comporte un cylindre 2 de section cylindrique dans cet exemple non limitatif. Un piston 3 peut coulisser à l'intérieur du cylindre, en étant mu par un élément moteur 1. Un liquide provenant d'un réservoir non représenté ou d'une source de liquide non représentée peut pénétrer dans le volume interne du cylindre par une soupape d'admission 4, ou être éjecté hors de ce volume par une soupape d'expulsion 5. Les soupapes 4 et 5 peuvent être commandées électromécaniquement par des actuateurs, mécaniquement par les mouvements du piston, ou ouvertes et fermées automatiquement en fonction des différences de pression entre l'intérieur et l'extérieur du cylindre.

Le moteur 1 est de préférence un vérin linéaire électrique capable de se déplacer alternativement dans un sens puis dans l'autre lorsqu'un courant électrique lui est fourni. Selon une caractéristique préférentielle de l'invention, le moteur peut être alimenté en 12 ou en 24 volts, ou à une tension inférieure, ce qui permet de l'utiliser dans une automobile avec le courant produit par une batterie. D'autres sources de tension continues ou alternatives sont également envisageables dans le cadre de l'invention. Des moteurs rotatifs avec un système de vis sans fin, de came, de bielle ou de courroie crantée, pour convertir la rotation en une translation, ou des vérins pneumatiques, peuvent aussi être employés.

Dans un mode de réalisation préférentiel, la course du piston peut être contrôlée afin de varier la quantité de liquide aspirée par la soupape 4 puis expulsée via la soupape 5. La course est de préférence contrôlée par un microcontrôleur en modifiant la durée d'alimentation du moteur 1. La commande peut être effectuée en circuit ouvert, c'est-à-dire en appliquant une durée d'impulsion qui dépend uniquement de la valeur de consigne choisie pour la course et le volume, ou de préférence en circuit fermé avec une boucle de contre-réaction prenant en compte une valeur de mesure fournie par un capteur de position 6. Le capteur de position peut comporter par exemple un ou plusieurs capteurs de hall, ou un encodeur, lié à l'arbre mobile du moteur 1.

Le piston comporte une tête de piston munie dans cet exemple de deux joints périphériques 30, 31 engagés chacun dans une gorge annulaire à la périphérie de la tête de piston. Les joints 30, 31 sont par exemple des joints o-ring et sont légèrement comprimés contre la face interne du cylindre. Un lubrifiant 32, par exemple une graisse compatible alimentaire, est emprisonnée entre les deux joints, la surface externe du piston et la face interne du cylindre afin de lubrifier le piston et de faciliter ses déplacements.

Le cylindre est de préférence réalisé en métal, par exemple en acier inoxydable ou dans un autre matériau bon conducteur thermique. Ses faces externes sont au moins partiellement recouvertes de pistes électriques 70, 71, .. faisant partie d'un circuit électrique de chauffage 7 ; les pistes ont une résistance électrique qui permet de produire de la chaleur lorsqu'un courant les traverse. Dans un mode de réalisation préférentiel, les pistes 70, 71 sont constituées d'encre conductrice électriquement déposée en couches fines par sérigraphie ou par un autre procédé d'impression sur la surface externe 20 du cylindre 2. En effet, il a été constaté de manière surprenante que ce procédé permet d'imprimer des couches suffisamment épaisses et résistantes pour ne pas être détruites par les courants importants nécessaires au chauffage de l'eau - même si la tension d'alimentation est réduite, par exemple 12V ou 24V continu.

Le circuit électrique constitué par les pistes comporte de préférence plusieurs branches 70, resp. 71 connectées en parallèle, ce qui permet de réduire le courant dans chaque branche. Des interrupteurs électriques 72 resp. 73, par exemple des transistors, des circuits intégrés ou des relais, permettent de modifier la configuration du circuit et de contrôler les branches qui sont alimentées en courant et qui contribuent au chauffage du cylindre et du liquide dans le cylindre. Ces interrupteurs peuvent être prévus sur la surface du cylindre, ou plus facilement dans le circuit électronique qui fournit le courant aux différentes branches du circuit.

Dans un mode de réalisation préférentiel, le circuit électrique de chauffage 7 comporte au moins deux branches 70, 71 qui occupent ou recouvrent des portions longitudinales distinctes du cylindre. Il est ainsi possible de choisir la portion longitudinale du cylindre qui est chauffée en chaque instant en sélectionnant les branches 70 ou 70+71 alimentées en courant. On alimentera donc un nombre de branches qui dépend de la quantité de volume à chauffer, de manière à éviter de larges portions du cylindre au-dessus de la limite de course supérieure du piston. Dans un exemple, seule la moitié inférieure du cylindre est chauffée avec la branche 70 lorsqu'un souhaite produite un demi-volume de cylindre d'eau chaude. Le nombre de pistes de chauffage 70, 71 peut être supérieur à deux.

Le choix du nombre de branches alimentées en courant peut aussi dépendre de la température du liquide souhaitée. De manière générale, la puissance de chauffe, et donc le temps nécessaire à l'obtention d'une température de liquide donnée, peut être contrôlé en agissant sur un ou plusieurs des paramètres suivants :
■ Nombre de branches 70, 71 du circuit alimentées en courant
■ Connexion des branches entre elles (série, parallèle, etc)
■ Durée du courant dans les différentes branches 70, 71. Il est possible d'alimenter certaines branches plus longtemps, ou différemment, que d'autres.
■ Intensité du courant dans chaque branche, ou modulation de cette intensité en fonction du temps.

Le choix du ou des paramètres ci-dessus dépend du volume de liquide à chauffer et de la température de consigne introduite avec un circuit de commande 12, et éventuellement de la température initiale du cylindre si elle est connue. Un capteur de température 11 peut en outre être utilisé pour mesurer la température du liquide ou d'une pièce en contact avec le liquide, afin d'interrompre ou de modifier le courant électrique en fonction de la température mesurée.

Les différentes branches du circuit 70, 71 n'ont pas nécessairement toutes la même longueur, la même épaisseur, la même largeur et/ou la même résistance électrique.

Dans un mode de réalisation avantageux, la pression du liquide éjecté hors du cylindre est également contrôlée à l'aide d'une boucle de réaction, afin d'employer une pression du liquide à travers la poudre de boisson adaptée au type de boisson désiré. La pression du liquide influence en effet directement la qualité du café ou de la boisson. Dans ce but, le dispositif de l'invention comporte avantageusement un détecteur de pression en aval du cylindre, fournissant une valeur de mesure utilisée par un circuit de régulation pour contrôler le courant appliqué au système de translation du piston et obtenir ainsi une pression de liquide constante au cours de l'évacuation et proche de la valeur de consigne dépendant de la boisson désirée.

L'élément chauffant à couches minces peut être remplacé par une résistance de type Egotherm (marque déposée), ou d'autres systèmes de chauffage similaires comportant des éléments chauffants enroulés et soudés autour de la surface externe d'un cylindre. Dans une variante, l'élément chauffant est remplacé ou complété par un élément refroidissant, par exemple de type Peltier, afin d'abaisser la température d'un liquide qui entre préchauffé dans la pompe.

Le dispositif décrit ci-dessus peut en outre être modifié en utilisant deux pistons ou plus travaillant avantageusement de façon déphasée pour transférer et chauffer plusieurs fois des quantités de liquide contrôlées. Cela permet de fournir un liquide chaud en continu, sans point mort lors du remplissage du piston. Par ailleurs, en modifiant le nombre de pistons effectivement utilisés, on peut contrôler le volume de liquide chauffé et transféré. Le nombre de pistons utilisés peut être modifié à l'aide de commandes numériques pour contrôler les soupapes qui doivent être ouvertes ou fermées lors de chaque cycle, et éventuellement les pistons qui doivent être déplacés. Les différents pistons peuvent être entraînés par le même moteur ou vérin, ou par des vérins individuels. Il est également possible d'employer des pistons à double effet, qui aspire et refoule le liquide en continu afin de réduire le temps de tirage.

Nous allons maintenant décrire le procédé mis en oeuvre pour produire une quantité désirée de liquide chaud. Dans une première étape, au moins un interrupteur électrique (par exemple 72 ou 72+73) est ouvert afin de faire circuler un courant électrique dans une des pistes conductrices 70, 71 sur la surface externe 20 du cylindre, de manière à préchauffer ce cylindre. La chaleur produite par les couches minces résistives est immédiatement transmise à la portion correspondante des parois du cylindre 2. Simultanément, ou peu de temps avant ou après, la soupape d'admission 4 est ouverte tandis que la soupape d'expulsion 5 est fermée, par exemple de manière électromécanique sous le contrôle d'un circuit électronique de commande, ou de façon mécanique, par exemple à l'aide de ressorts.

Le piston 3 est ensuite relevé sous l'action du moteur 1, de manière à aspirer le liquide à l'intérieur du cylindre 2 et au travers de la soupape d'admission 4. Le chauffage du cylindre est de préférence poursuivi au cours de l'aspiration. La course du piston 3 est de préférence régulée de manière à correspondre au volume de liquide à produire à l'aide de la commande à boucle ouverte ou à boucle de contre-réaction fermée évoqué plus haut.

Lorsque le piston 3 est arrivé en bout en course ou à la hauteur correspondant au volume de liquide désiré, il est de préférence maintenu à cette position pendant la durée nécessaire au chauffage du liquide à la température désirée. Cette durée peut être déterminée en fonction du volume de liquide, ou de préférence interrompue lorsque la sonde de température 11 indique que le liquide a atteint la température souhaitée, par exemple 94° C pour le café. Le courant électrique injecté dans le circuit, ainsi que le nombre de branches traversées par un courant, peuvent être régulés en fonction du volume de liquide à chauffer et/ou de la température de consigne à atteindre. La soupape d'admission 4 est de préférence fermée dès que le piston a atteint sa hauteur maximale, afin d'éviter que le liquide chauffé ne ressorte par le canal d'admission ou que la chaleur ne s'échappe par convexion ou mélange de liquide.

La soupape d'expulsion 5 est ensuite ouverte, et le piston 3 redescendu de manière à expulser le liquide chauffé. Le chauffage du cylindre peut être maintenu et régulé pendant cette phase d'expulsion de manière à garantir une température du liquide constante tout au long de l'expulsion. Dans une variante préférentielle, le chauffage est interrompu, ou au moins réduit par diminution du courant électrique, avant l'expulsion complète du liquide hors du cylindre. On exploite ainsi l'inertie thermique du cylindre et on évite de transmettre une chaleur au cylindre qui n'aura pas le temps d'être communiquée au liquide. L'interruption ou la réduction rapide du chauffage permet en outre d'éviter des différences de température trop importantes entre les dernières gouttes du liquide expulsées et celles qui quittent le cylindre en premier, ce qui permet par exemple d'éviter la production de vapeur inutile par évaporation des dernières gouttes de liquide. Il est aussi possible de modifier les connexions électriques du circuit de chauffage durant le déplacement du piston, et par exemple d'interrompre plus rapidement l'alimentation des pistes imprimées qui recouvrent le haut du cylindre vidé en premier.

Un circuit électronique 8, par exemple un microcontrôleur contrôlé par un programme d'ordinateur ou un circuit FPGA, commande de préférence les événements suivants :
■ Ouverture et fermeture des soupapes 4, 5.
■ Alimentation du moteur 1 de manière à provoquer le déplacement du piston dans un sens ou l'autre
■ Commande des différentes pistes 70, 71, ..du circuit de chauffage 7
■ Prise en compte des signaux fournis par les capteurs de position 6 du piston, par le capteur optionnel de température 11, et par un circuit de commande 12 permettant d'introduire des valeurs de consigne pour le volume à chauffer et/ou la température à obtenir.

Dans les modes de réalisation décrits plus haut, le liquide est chauffé dans le cylindre. Il est cependant aussi possible d'aspirer et de transférer un liquide avec la pompe décrite sans le chauffer, par exemple en commandant le corps de chauffe de manière à ne pas y faire circuler de courant, ou en prévoyant une pompe sans corps de chauffe.

Le dispositif et le procédé de l'invention peuvent être employés par exemple pour un distributeur de boisson chaude, notamment une machine à café, y compris une machine à café pour voiture ou caravane ou mobilhome, ou tous véhicules autonomes électriquement tels qu'avions, taxi, trains, bateaux, etc. Une pompe similaire peut aussi être employée pour le dosage de liquide chauffé, dans l'industrie alimentaire, pour le collage avec une colle chauffée, pour l'évacuation de condensats, etc.

## Revendications

1. Pompe à liquide comportant :
- un cylindre (2) ;
- une soupape d'admission (4) de liquide dans le cylindre ;
- une soupape d'expulsion (5) dudit liquide hors du cylindre ;
- un piston (2) coulissant dans ledit cylindre de manière à aspirer ledit liquide dans le cylindre, puis à l'expulser hors du cylindre ;
- un circuit électrique (7) de chauffage du cylindre avec aux moins deux branches (70, 71) afin de chauffer électriquement le liquide dans le cylindre,
**caractérisé en ce que** :
- lesdites branches (70, 71) réalisées sous la forme de piste mince électriquement conductrice déposée sur ou dans la paroi (20) du cylindre (2) occupent des portions longitudinales différentes le long dudit cylindre (2), afin de contrôler la portion longitudinale du cylindre (2) chauffée en sélectionnant les branches (70, 71) parcourues par un courant en fonction du volume de liquide chauffé à produire.

2. La pompe de la revendication 1, dans laquelle ledit circuit électrique (7) comporte des interrupteurs (72, 73) pour modifier le parcours du courant dans lesdites branches.

3. La pompe de la revendication 2, dans laquelle plusieurs branches (70, 71) occupent la même portion longitudinale le long dudit cylindre (2), le nombre de branche sélectionnée dépendant de la température de consigne à atteindre.

4. La pompe de l'une des revendications 2 à 3, comportant un circuit de régulation (8) agencé afin de sélectionner le nombre de branches dans lesquelles un courant circule en fonction de la température de consigne du liquide et/ou du volume du liquide.

5. La pompe de l'une des revendications 1 à 4, comportant un circuit de régulation (8) agencé afin de varier le courant électrique dans ledit circuit en fonction de la température de consigne du liquide et/ou du volume du liquide.

6. La pompe de l'une des revendications 1 à 4, comportant une sonde de température pour mesurer la température du liquide et un circuit de régulation (8) agencé pour interrompre le chauffage du liquide et pour commencer l'expulsion du liquide hors du cylindre dès que la température du liquide a atteint une valeur de consigne prédéterminée.

7. La pompe de la revendication 6, ledit circuit de régulation étant agencé pour mesurer la température du liquide au cours de l'expulsion et pour contrôler le courant électrique dans ledit circuit de manière à garantir une température de liquide constant au cours de l'expulsion.

8. La pompe de l'une des revendications 1 à 7, dans laquelle ladite piste mince est constituée par une piste imprimée sur la paroi externe (20) du cylindre (2).

9. La pompe de l'une des revendications 1 à 8, comportant au moins un capteur de Hall (6) pour détecter la position longitudinale du piston.

10. La pompe de l'une des revendications 1 à 9, dans laquelle ledit piston (3) est actionné par un moteur électrique (1), la course du piston pouvant être ajustée en fonction du volume de liquide chauffé à produire.

11. La pompe de l'une des revendications 1 à 10, ledit piston (3) étant actionné par un vérin linéaire (1).

12. La pompe de l'une des revendications 1 à 11, ledit piston (3) comportant deux joints annulaires (30, 31) sur sa périphérie, de la graisse alimentaire (32) étant emprisonnée entre ledit piston (3), la face interne dudit cylindre (2) et lesdits joints (30, 31).

13. La pompe de l'une des revendications 1 à 12, comportant plusieurs pistons déphasés.

14. La pompe de l'une des revendications 1 à 13, comportant au moins un piston à double effet.

15. La pompe de l'une des revendications 1 à 14, comportant un détecteur de pression et un circuit de régulation (8) agencé afin de contrôler la pression du liquide à la sortie du cylindre.

16. La pompe de l'une des revendications 1 à 15, comportant un élément Peltier pour refroidir le liquide dans le cylindre.

17. La pompe de l'une des revendications 1 à 16, comportant un moteur électrique (1) alimenté en 12V ou 24V.

18. Procédé pour délivrer un volume déterminé de liquide chauffé, comportant les étapes suivantes :
- Ouverture d'au moins un interrupteur électrique (72, 73) afin de faire circuler un courant électrique dans un circuit électrique de chauffage (7), la chaleur produite étant transmise aux parois d'un cylindre (2), le circuit électrique (7) incluant au moins une résistance (70, 71) sous la forme de piste mince électriquement conductrice déposée sur ou dans la paroi (20) du cylindre (2)
- Ouverture d'une soupape d'admission (4) de liquide afin de permettre à un liquide de pénétrer dans ledit cylindre (2),
- Déplacement longitudinal dans un premier sens d'un piston (3) dans ledit cylindre (2), de manière à aspirer ledit volume déterminé de liquide dans ledit cylindre (2),
- Fermeture de ladite soupape d'admission (4), et ouverture d'une soupape d'expulsion (5),
- Déplacement longitudinal dans un deuxième sens opposé audit premier sens dudit piston (3) dans ledit cylindre (2), de manière à expulser le liquide chauffé hors dudit cylindre
et comportant aussi
- une étape de détermination du volume de liquide à chauffer, une étape de contrôle de la course du piston (3) en fonction dudit volume, et
- une étape de contrôle dudit circuit électrique (7) de chauffage de manière à adapter le courant électrique et/ou la connexion du circuit électrique de chauffage en fonction dudit volume.

19. Le procédé de la revendication 18, comprenant une étape de sélection de la portion longitudinale du cylindre (2) chauffée en fonction du volume de liquide à chauffer.

20. Le procédé de l'une des revendications 18 à 19, dans lequel le courant électrique est interrompu avant l'expulsion du liquide et dès que le liquide a atteint une température de consigne prédéterminée.

## Patentansprüche

1. Flüssigkeitspumpe mit:
- einem Zylinder (2);
- einem Einlassventil (4) von Flüssigkeit in den Zylinder;
- einem Auslassventil (5) der besagten Flüssigkeit aus dem Zylinder;
- einem Kolben (2), der im besagten Zylinder gleitet, um die besagte Flüssigkeit in den Zylinder einzusaugen und sie dann aus dem Zylinder auszulassen;
- einer elektrischen Schaltung (7) zum Heizen des Zylinders mit mindestens zwei Schenkeln (70, 71), um die Flüssigkeit im Zylinder elektrisch zu heizen,
**dadurch gekennzeichnet, dass**:
die besagten, in der Form eines dünnen elektrisch leitenden und auf oder in der Wand (20) des Zylinders (2) angebrachten Streifens ausgeführten Schenkel (70, 71) verschiedene Längspositionen entlang des besagten Zylinders (2) einnehmen, um die aufgeheizte Längsportion des Zylinders (2) zu regulieren, indem die Schenkel (70, 71), die durch einen Strom durchflossen werden, in Abhängigkeit des zu erzeugenden Volumens der geheizten Flüssigkeit ausgewählt werden.

2. Die Pumpe von Anspruch 1, worin die besagte elektrische Schaltung (7) Schalter (72, 73) aufweist, um die Bahn des Stromes in den besagten Schenkeln zu ändern.

3. Die Pumpe von Anspruch 2, worin mehrere Schenkel (70, 71) die gleiche Längsportion entlang des besagten Zylinders (2) einnehmen, worin die Zahl der ausgewählten Schenkel vom Temperatureinstellwert abhängig ist.

4. Die Pumpe eines der Ansprüche 2 bis 3, mit einer derart angelegten Steuerschaltung (8), um die Anzahl der Schenkel, in welchen ein Strom fliesst, in Abhängigkeit vom Temperatureinstellwert der Flüssigkeit oder vom Volumen der Flüssigkeit, auszuwählen.

5. Die Pumpe eines der Ansprüche 1 bis 4, mit einer derart angelegten Steuerschaltung (8), um den elektrischen Strom in der besagten Schaltung in Abhängigkeit vom Temperatureinstellwert der Flüssigkeit oder vom Volumen der Flüssigkeit zu variieren.

6. Die Pumpe eines der Ansprüche 1 bis 4, mit einem Temperatursensor zum Messen der Temperatur der Flüssigkeit und einer derart angelegten Kontrollschaltung (8), um die Heizung der Flüssigkeit zu unterbrechen und das Auslassen der Flüssigkeit aus dem Zylinder zu beginnen, sobald die Temperatur der Flüssigkeit einen vorbestimmten Einstellwert erreicht hat.

7. Die Pumpe von Anspruch 6, wobei die besagte Steuerschaltung derart angelegt ist, um die Temperatur der Flüssigkeit während des Auslassens zu messen und um den elektrischen Strom in der besagten Schaltung zu regulieren, um eine konstante Temperatur der Flüssigkeit während des Auslassens zu gewährleisten.

8. Die Pumpe eines der Ansprüche 1 bis 7, worin der besagte dünne Streifen aus einem auf der Aussenwand (20) des Zylinders (2) gedruckten Streifen besteht.

9. Die Pumpe eines der Ansprüche 1 bis 8, mit mindestens einem Hallsensor (6), um die Längsposition des Kolbens zu ermitteln.

10. Die Pumpe eines der Ansprüche 1 bis 9, worin der besagte Kolben (3) durch einen Elektromotor (1) angetrieben wird, wobei der Kolbenhub in Abhängigkeit des zu erzeugenden Volumens der geheizten Flüssigkeit angepasst werden kann.

11. Die Pumpe eines der Ansprüche 1 bis 10, wobei der besagte Kolben (3) durch einen Linearantrieb (1) angetrieben wird.

12. Die Pumpe eines der Ansprüche 1 bis 11, wobei der Kolben (3) auf seiner Peripherie zwei Ringdichtungen (30, 31) aufweist, wobei Speisefett (32) zwischen dem besagten Kolben (3), der Innenseite des besagten Zylinders (2) und den besagten Dichtungen (30, 31) eingeschlossen wird.

13. Die Pumpe eines der Ansprüche 1 bis 12, mit mehreren phasenverschobenenen Kolben.

14. Die Pumpe eines der Ansprüche 1 bis 13, mit mindestens einem doppeltwirkenden Kolben.

15. Die Pumpe eines der Ansprüche 1 bis 14, mit einem Drucksensor und einer derart angelegten Steuerschaltung (8), um den Druck der Flüssigkeit am Ausgang des Zylinders zu regulieren.

16. Die Pumpe eines der Ansprüche 1 bis 15, mit einen Peltier-Element, um die Flüssigkeit im Zylinder zu kühlen.

17. Die Pumpe eines der Ansprüche 1 bis 16, mit einem Elektromotor (1), der mit 12V oder 24V Strom gespeist wird.

18. Verfahren zur Verschaffung eines bestimmten Volumens geheizter Flüssigkeit, mit den folgenden Schritten:
- Öffnen mindestens eines elektrischen Schalters (72, 73), um einen elektrischen Strom in einer elektrischen Heizschaltung (7) fliessen zu lassen, wobei die erzeugte Hitze an die Wände eines Zylinders (2) abgegeben wird, wobei die elektrische Schaltung (7) mindestens einen Widerstand (70, 71) in der Form eines dünnen elektrisch leitenden und auf oder in der Wand (20) des Zylinders (2) angebrachten Streifens ausgeführt,
- Öffnen eines Einlassventils (4) von Flüssigkeit, um einer Flüssigkeit in Einlass den besagten Zylinder (2) zu gewähren,
- Längsverschieben eines Kolbens (3) in eine erste Richtung im Zylinder (2), um das besagte Flüssigkeitsvolumen in den Zylinder (2) einzusaugen,
- Schliessen des besagten Einlassventils (4) und Öffnen eines Auslassventils (5),
- Längsverschieben des besagten Kolbens (3) in eine zweite, zur besagten ersten Richtung entgegengesetzte Richtung im Zylinder (2), um die geheizte Flüssigkeit aus dem Zylinder auszulassen,
sowie zudem mit:
einem Schritt der Bestimmung des Volumens der zu heizenden Flüssigkeit, einem Schritt der Steuerung des Hubs des Kolbens (3) in Abhängigkeit des besagten Volumens, und
einem Schritt der Steuerung der besagten elektrischen Schaltung (7), um den elektrischen Strom und/oder die Verbindung der elektrischen Heizschaltung in Abhängigkeit des besagten Volumens anzupassen.

19. Das Verfahren von Anspruch 18, mit einem Schritt der Selektion der Längsportion des abhängig des Volumens der zu heizenden Flüssigkeit geheizten Zylinders (2).

20. Das Verfahren eines der Ansprüche 18 bis 20, worin der elektrische Strom unterbrochen wird, bevor die Flüssigkeit ausgelassen wird und sobald die Flüssigkeit einen vorbestimmten Temperatureinstellwert erreicht hat.

## Claims

1. Liquid pump comprising:
- a cylinder (2);
- an inlet valve (4) for feeding the liquid into the cylinder;
- a discharge valve (5) for discharging the liquid out of the cylinder;
- a piston (2) sliding in said cylinder so as to draw said liquid into the cylinder and to expel the same outside the cylinder;
- an electric circuit (7) for heating the cylinder, with at least two branches (70, 71) for electrically heating the liquid in the cylinder,
**characterized in that**:
said branches (70, 71) made in the form of an electrically conducting thin track deposited on or in the wall (20) of the cylinder (2) occupy different longitudinal portions along said cylinder (2) in order to control the longitudinal portion of the cylinder (2) heated by selecting the branches (70, 71) through which a current passes depending on the volume of heated liquid to be produced.

2. The pump of claim 1, wherein said electric circuit (7) has switches (72, 73) for modifying the trajectory of the current in said branches.

3. The pump of claim 2, wherein several branches (70, 71) occupy the same longitudinal portion along said cylinder (2), wherein the number of branches selected depends on the temperature set value to be reached.

4. The pump of one of the claims 2 to 3, including a control circuit (8) arranged so as to select the number of branches in which a current circulates depending on the liquid's temperature set value and/or on the liquid's volume.

5. The pump of one of the claims 1 to 4, including a control circuit (8) arranged to vary the electric current in said circuit depending on the liquid's temperature set value and/or on the liquid's volume.

6. The pump of one of the claims 1 to 4, including a temperature sensor for measuring the liquid's temperature and a control circuit (8) arranged to interrupt the heating of the liquid and to begin the expulsion of the liquid out of the cylinder as soon as the liquid's temperature has reached a predetermined temperature set value.

7. The pump of claim 6, said control circuit being arranged for measuring the liquid temperature during expulsion and for controlling the electric current in said circuit so as to guarantee a constant liquid temperature during expulsion.

8. The pump of one of the claims 1 to 7, wherein said thin track is constituted by a track printed on the outer wall (20) of the cylinder (2).

9. The pump of one of the claims 1 to 8, having at least one Hall sensor (6) for detecting the piston's longitudinal position.

10. The pump of one of the claims 1 to 9, wherein said piston (3) is actuated by an electric motor (1), the piston's run being adjustable depending on the volume of heated liquid to be produced.

11. The pump of one of the claims 1 to 10, said piston (3) being actuated by a linear actuator (1).

12. The pump of one of the claims 1 to 11, said piston (3) having two ring joints (30, 31) on its periphery, edible fat (32) being confined between said piston (3), the inner face of said cylinder (2) and said joints (30, 31).

13. The pump of one of the claims 1 to 12, having several phase-shifted pistons.

14. The pump of one of the claims 1 to 13, having at least one double-acting piston.

15. The pump of one of the claims 1 to 14, having a pressure sensor and a control circuit (8) arranged so as to control the pressure of the liquid at the exit of the cylinder.

16. The pump of one of the claims 1 to 15, having a Peltier element for cooling the liquid in the cylinder.

17. The pump of one of the claims 1 to 16, having an electric motor (1) powered at 12V or 24V.

18. Method for supplying a determined volume of heated liquid, including the following steps:
- opening at least one electric switch (72, 73) in order to have an electric current circulate in an electric heating circuit (7), the heat produced being transmitted to the walls of a cylinder (2), the electric circuit (7) including at least one resistor (70, 71) in the form of an electrically conducting thin track deposited on or in the wall (20) of the cylinder (2),
- opening a liquid inlet valve (4) for enabling the liquid to be fed into said cylinder (2),
- longitudinally displacing in a first direction a piston (3) in said cylinder (2) so as to draw said determined liquid volume into said cylinder (2),
- closing said inlet valve (4) and opening a discharge valve (5),
- longitudinally displacing in a second direction opposite to the first direction said piston (3) in said cylinder (2) so as to expel the heated liquid outside the cylinder,
and also including
a step of determining the volume of liquid to be heated, a step of controlling the run of the piston (3) depending on said volume, and
a step of controlling said electric heating circuit (7) so as to adapt the electric current and/or the connection of the electric heating circuit depending on said volume.

19. The method of claim 18, including a step of selecting the longitudinal portion of the cylinder (2) heated depending on the volume of liquid to be heated.

20. The method of one of the claims 18 to 20, wherein the electric current is interrupted before the liquid is expelled and as soon as the liquid has reached a predetermined temperature set value.
